# EUROPÄISCHE PATENTANMELDUNG

(11) **EP 3 779 875 A1**
(43) Veröffentlichungstag der Anmeldung: **17.02.2021**
(21) Anmeldenummer: 20188672.8
(22) Anmeldetag: 30.07.2020
(51) Int. Cl.: G06T 7/00

(54) **COMPUTERGESTÜTZTES VERFAHREN UND EINRICHTUNG ZUM EINMESSEN VON BAUELEMENTEN AUF EINER BAUSTELLE FÜR DIE ERRICHTUNG ODER DEN AUSBAU EINES GEBÄUDES**

(30) Priorität: 02.08.2019 DE 102019120957
(71) Anmelder: PERI GMBH, 89264 Weissenhorn (DE)
(72) Erfinder: WELZ, Kiril, 89264 Weißenhorn (DE); PAINTNER, Thomas, 89264 Weißenhorn (DE)
(74) Vertreter: Maiwald Patent- und Rechtsanwaltsgesellschaft mbH

(57) **Zusammenfassung**

Die Erfindung betrifft ein computergestütztes Verfahren sowie eine dieses umsetzende Einrichtung zum Einmessen von Bauelementen (1; 1'; 1") auf einer Baustelle für die Errichtung oder den Ausbau eines Gebäudes, umfassend die folgenden Schritte:
- Aufstellen (A) eines optischen Mess- und Projektionsgeräts (3) im Nahbereich mindestens eines zu verbauenden Bauelements (1; 1'; 1") auf der Baustelle,
- Einlesen (B) der räumlichen Umgebung des zu verbauenden Bauelements (1; 1'; 1") zur Erstellung eines dreidimensional verzerrungsfreien IST-Umgebungsbildes (7),
- Abgleichen (C) des erstellten IST-Umgebungsbildes () mit einem SOLL-Umgebungsbild (13) gemäß vorgegebener Bauplanungsdaten durch eine Abgleicheinheit (11) des Mess- und Projektionsgeräts (3),
- Ermitteln (D) einer SOLL-Position (15) des zu verbauenden Bauelements (1; 1'; 1") im abgeglichenen IST-Umgebungbild (7) nach Maßgabe der Bauplanungsdaten,
- Projektion (E) eines aus der ermittelten SOLL-Position () der Bauplanungsdaten erstellten SOLL-Positionsbildes (17) des zu verbauenden Bauelements (1; 1'; 1") durch das optische Mess- und Projektionsgerät (3) in dessen räumlicher Umgebung auf der Baustelle zur Montageunterstützung.

## Beschreibung

Die Erfindung betrifft ein computergestütztes Verfahren zum Einmessen von Bauelementen auf einer Baustelle für die Errichtung oder den Ausbau eines Gebäudes. Außerdem betrifft die Erfindung auch eine Einrichtung zum Einmessen von Bauelementen, die ein solches Verfahren ausführt, sowie ein das Verfahren verkörperndes Computerprogrammprodukt.

Das Einsatzgebiet der Erfindung erstreckt sich auf die Bautechnik, insbesondere auf die für die Errichtung oder den Ausbau von Gebäuden erforderliche Mess- und Datenverarbeitungstechnik, um Bauplanungsdaten einer Ausführungsplanung mit hoher Qualität und Zeiteffizienz in die Realität umzusetzen. In der bisherigen Praxis werden auf Basis solcher Bauplanungsdaten, insbesondere gemäß der diese beinhaltenden geometrischen Baupläne, unter Zuhilfenahme von Messmitteln, wie beispielsweise einem Maßband, Zollstock oder Nivellier-Gerät, die zu verbauenden Bauelemente vor der Montage maßgerecht positioniert. Es erfolgt anschließend eine händische Markierung von Befestigungspunkten, Verlaufslinien und dergleichen.

Dies gilt nicht allein für die Montage von Bauelementen, wie Sanitärobjekte, Elektroinstallation, Rohre und Kanäle, Trockenbauelemente und anderes. Bauelemente im Sinne der Erfindung stellen auch Schalungselemente dar, welche als Hilfsmittel zum Betonieren von Gebäudeteilen verwendet werden und auf vergleichbare Weise einzumessen sind. Zum Aufstellen von Schalungselementen als Bauelemente wird bislang auf der Basis LK:
von aus speziellen Schalungsplänen hervorgehenden geometrischen Daten der Aufstellort angezeichnet. Auch hier wird die Position des Bauelements in der Regel händisch ausgemessen.

Oftmals kommt es dabei zu Umsetzungsfehlern der Plandaten, insbesondere durch Messirrtümer oder aufgrund der Tatsache, dass ein vorhergehender Bauabschnitt nicht planungskonform ausgeführt wurde. All diese Risiken können in der Praxis zu einem erheblichen Nacharbeitsaufwand führen, welcher auch den Baufortschritt verzögern kann. In jüngster Zeit kommen aus diesen Gründen vermehrt optoelektronische Hilfsmittel zum Einsatz, welche auf der Baustelle eingesetzt werden, um den Handwerker bei der korrekten Umsetzung der Bauplanungsdaten der Ausrührungsplanung zu unterstützen. Die vorliegende Erfindung ist auf diese Thematik gerichtet.

### Stand der Technik

Aus der US 2008/0055554 A1 geht eine Einrichtung zum Einmessen von Bauelementen auf einer Baustelle hervor, welche eine Unterstützung für die Errichtung des Gebäudes oder dessen Ausbau bietet. Die Einrichtung umfasst ein optisches Projektionsgerät, das über einen Rechner angesteuert wird, um eine naturgetreue Projektion geometrischer Plandaten in beispielsweise einem Raum eines Rohbaus durchzuführen. Hierdurch kann dem Handwerker der Fertigzustand eingebauter Bauelemente optisch visualisiert werden. Aus dem projizierten Planungsbild können Befestigungspunkte und Verlaufslinien abgetragen werden, so dass ein manuelles Einmessen entfällt und Messirrtümer verringert werden.

Nachteilhaft bei dieser technischen Lösung erscheint jedoch die Informationsvielfalt einer Gesamtdarstellung, welche wiederum zu Interpretationsirrtümern bei der Feststellung von Befestigungspunkten und dergleichen führen kann. Außerdem kann eine realistische Projektion nur dann erfolgen, wenn der Aufstellort des Projektionsgeräts relativ zum Raum an der richtigen Stelle auf der Baustelle gewählt wurde. Hierfür fällt ein entsprechender Einrichtungsaufwand an.

Es ist daher die Aufgabe der vorliegenden Erfindung, ein Verfahren und eine Einrichtung zum Einmessen von Bauelementen auf einer Baustelle zu schaffen, welche in anwenderfreundlicher Weise eine hochgenaue Positionierung der Bauelemente ermöglicht.

### Offenbarung der Erfindung

Verfahrenstechnisch wird die Aufgabe durch Anspruch 1 gelöst. Hinsichtlich einer das Verfahren umsetzenden Einrichtung wird auf Anspruch 6 verwiesen und ein das Verfahren verkörperndes Computerprogrammprodukt ist im Anspruch 16 angegeben. Die verbleibenden abhängigen Ansprüche geben vorteilhafte Weiterbildungen der Erfindung in verfahrens- bzw. einrichtungstechnischer Hinsicht wieder.

Die Erfindung umfasst in verfahrenstechnischer Hinsicht die folgenden Schritte:
- Aufstellen eines optischen Mess- und Projektionsgeräts im Nahbereich mindestens eines zu verbauenden Bauelements auf der Baustelle,
- Einlesen der räumlichen Umgebung des zu verbauenden Bauelements zur Erstellung eines dreidimensional verzerrungsfreien Ist-Umgebungsbildes,
- Abgleichen des erstellten Ist-Umgebungsbildes mit einem Soll-Umgebungsbild gemäß vorgegebener Bauplanungsdaten durch eine Abgleicheinheit des Mess- und Projektionsgeräts,
- Ermitteln einer Soll-Position des zu verbauenden Bauelements im abgeglichenen Ist-Umgebungsbild nach Maßgabe der Bauplanungsdaten,
- Projektion eines aus der ermittelten Soll-Position der Bauplanungsdaten erstellten verzerrungsfreien Soll-Positionsbildes des zu verbauenden Bauelements durch das optische Mess- und Projektionsgerät in dessen räumlicher Umgebung auf der Baustelle zur Montageunterstützung.

Mit Ausnahme des vorstehend erstgenannten Verfahrensschritts sind alle folgenden Verfahrensschritte zwingend computergestützt durchzuführen. In Bezug auf den ersten Verfahrensschritt, der das Aufstellen des Mess- und Projektionsgeräts beinhaltet, kann jedoch auch hierbei insoweit eine Computerunterstützung erfolgen, als dass die Aufstellung anhand vorgegebener Ortskoordinaten, beispielsweise durch manuelle Eingabe in das Gerät oder per einscanbarer Aufstellinformation, beispielsweise aus einem vor Ort angebrachten QR-Code oder durch Triangulation oder einer Kombination der genannten Methoden durchgeführt wird. Dabei kann zum Abgleich der Eingabedaten eine GPS-Unterstützung für die korrekte Positionierung erfolgen.

Die erfindungsgemäße Lösung verwendet nach dem Aufstellen eine Raumabtastung der Umgebung, um ein verzerrungsfreies Bild hiervon - das Ist-Umgebungsbild - zu erstellen. Dies bildet die Voraussetzung dafür, dass das Mess- und Projektionsgerät im Rahmen seiner Projektionsfunktion die in dem Raum bestehenden oder anzubringenden Positionsmarken in einem Abbild des zu verbauenden Bauelements als sogenanntes Soll-Positionsbild darstellen kann. Um Einmessfehler zu vermeiden, umfasst die erfindungsgemäße Lösung auch ein Abgleichen des durch das optische Mess- und Projektionsgerät im Rahmen der Messfunktion erstellten Ist-Umgebungsbildes mit dem geplanten Soll-Zustand vor der Montage des Bauelements. Dieses Soll-Umgebungsbild wird zu diesem Zweck den vorgegebenen Bauplanungsdaten entnommen. Führt der Ist-Soll-Vergleich zu einem negativen Ergebnis, indem das Ist-Umgebungsbild nicht der erwarteten Umgebung für den Einbau des einzumessenden Bauelements entspricht, beispielsweise indem an der Montagestelle in unvorhergesehener Weise eine Rohrleitung eingebaut wurde, so erfolgt eine Fehlerausgabe und das Einmessverfahren wird an dieser Stelle gestoppt, um den bestehenden Mangel zu beseitigen. Der Ist-Soll-Vergleich der Umgebungsbilder ist im gewissen Maße auch fehlertolerant und prüft die vorhandenen Unterschiede nur in einem einbaurealisierungsrelevanten Detaillierungsgrad.

Ist das Ist-Umgebungsbild positiv abgeglichen worden, so wird für das zu verbauende Bauelement, welches manuell oder automatisch vorgegeben werden kann, die dazu passende Soll-Position ermittelt, beispielsweise Anbringungspunkte und Umrisse eines Elektroinstallationskastens relativ zum Ist-Umgebungsbild, welches nach dem Abgleich ja auch dem Soll-Umgebungsbild entspricht. Aus diesen Bauplanungsdaten wird ein projektierbares Soll-Positionsbild erstellt, das durch das optische Mess- und Projektionsgerät in die räumliche Umgebung auf der Baustelle hineinprojiziert wird, wodurch die angestrebte Montageunterstützung in hochgenauer Weise erzielt wird.

Die erfindungsgemäße Lösung gestattet damit eine gegenüber dem Stand der Technik genauere Einmessung und verbesserte Überprüfung zu montierender Bauelemente, die hinsichtlich der montagerelevanten Informationen detailliert und an der richtigen Stelle im oder am Gebäude darstellbar sind. Hierdurch werden Fehleinbauten vermieden und das Risiko von Beschädigungen eventuell verdeckt verlaufender Leitungen im Rohbau wird minimiert. Diesbezüglich ist es auch möglich, dass das zu projizierende Soll-Positionsbild des zu verbauenden Bauelements auch zusätzliche bildliche Informationen hinsichtlich derartig verdeckt verlaufender Leitungen und dergleichen enthält, welche vorzugsweise farblich von der Geometrieinformation des einzumessenden Bauelements abgesetzt sind.

Die Projektion des Soll-Positionsbildes auf die Oberflächen von Wänden, Decken oder Böden kann dann dabei auch gewerksabhängig oder datenabhängig sein, beispielsweise kann optional ausgewählt werden, ob nur Gas-, Wasser- oder Elektroleitungen bzw. -rohre für den Ausbau eines Gebäudes oder beispielsweise nur Schalungselemente für die Errichtung des Gebäudes, beispielsweise eines Aufzugschachtes, gezeigt werden sollen. Auch diese verschiedenartigen Informationen können farblich voneinander abgesetzt sein.

Gemäß einer die Erfindung weiter verbessernden Maßnahme wird vorgeschlagen, dass nach erfolgter Montage eine Qualitätsüberprüfung des Bauelements durchgeführt wird nach Maßgabe der folgenden Schritte:
- Einlesen des Ist-Positionsbildes durch das optische Mess- und Projektionsgerät für einen nachfolgenden
- Abgleich mit dem Soll-Positionsbild im Kontext mit dem Soll-Umgebungsbild. Optional kann nach positiver Qualitätsprüfung des montierten Bauelements auch ein
- Abspeichern der Prüfinformation in einer Bauausführungsdatenbank zu Dokumentationszwecken durchgeführt werden, wobei andererseits nach negativer Qualitätsprüfung auch eine
- Ausgabe einer Fehlermeldung in Form eines Nacharbeitshinweises erfolgen kann.

Somit gewährleisten diese Maßnahmen eine Art assistierte Qualitätsprüfung und Dokumentation des Baufortschritts in Echtzeit mit Baufortschrittsanzeige.

Ist nach negativer Qualitätsprüfung eine Nacharbeitung erforderlich, indem beispielsweise ein Elektroinstallationskasten niedriger aufzuhängen ist als geschehen, so kann ein entsprechender Nacharbeitshinweis auch in Textform oder kombinierter Text-/Bildform durch das optische Mess- und Projektionsgerät an die entsprechende Stelle im Raum projiziert werden als Soll-Ist-Abweichungsmarkierung oder dergleichen.

Wird infolge einer positiven Qualitätsprüfung der aktuelle Bau- oder Montageschritt als fertiggestellt erkannt, so kann durch das computergestützte Verfahren optional auch eine Startinformation an ein geplantes Nachfolgegewerk ausgegeben werden, beispielsweise für ein Anstreichen des vorstehend erwähnten exemplarischen Elektroinstallationskastens mit Wandfarbe. Eine derartige Startinformation kann beispielsweise per Datenfernübertragung via E-Mail, SMS oder eine andere Art von Push-Benachrichtigung, die vorzugsweise im Rahmen eines BIM-Modells ausgebbar sind, automatisiert an den Verantwortlichen des Nachfolgegewerks übertragen werden.

Das vorstehend allgemein beschriebene computergestützte Verfahren zum Einmessen von Bauelementen auf einer Baustelle ist vorzugsweise in ein BIM-Modell (Building Information Modelling) implementiert, so dass in diesem Rahmen ein Datenaustausch hinsichtlich der Bauplanungsdaten, des Baufortschritts und eine Dokumentation der Qualitätsprüfung erfolgen kann.

Das erfindungsgemäße Verfahren kann durch eine systemtechnisch dezentral oder verteilt aufgebaute Einrichtung umgesetzt werden, welche das optische Mess- und Projektionsgerät als dezentrale Komponente mit umfasst. Dessen Bilderzeugungseinheit ist vorzugsweise als eine 3D-Kamera, beispielsweise als ToF-Kamera ausgebildet, mit welcher Raumbilder erzeugbar sind, beispielsweise im Format RGB-D. Eine derartige Raumeinmessung ist unabhängig von Nivelliergeräten oder sonstigen Einmesspunkten. Das System misst sich vielmehr selbst ein und kann in Abgleich mit den Planungsdaten in vorstehend erläuterter Weise die verzerrungsfreie Projektion der Einbaulage von Bauelementen selbstständig vornehmen. Hierzu wird vorzugsweise auf gespeicherte Muster in Verbindung mit KI-Algorithmen (KI = Künstliche Intelligenz) zurückgegriffen.

Gegebenenfalls muss jedoch zusätzlich zunächst die Position des Aufstellorts ermittelt oder mitgeteilt werden. Das Gerät berechnet hieraus dann die Projektionen und deren Verortung im Raum. In diesem Zusammenhang ist es hilfreich, die Positionierung anhand der aus den Bauplanungsdaten entnommenen Informationen zur ungefähren Position hinsichtlich Stockwerk und Raum, eine Grobpositionierung mithilfe von GPS oder Triangulation oder mit Bezug auf einen bekannten Fixpunkt auf der Baustelle vorzunehmen.

Mit dem optischen Mess- und Projektionsgerät nach einem der vorstehend erörterten Varianten ist vorzugsweise eine zentral angeordnete softwaregesteuerte Rechnereinheit verbunden, welche die erfindungsgemäße Datenverarbeitung durchführt. Dabei übernimmt eine softwaretechnische Abgleicheinheit das Abgleichen des durch die vorzugsweise ToF-Kamera aufgenommenen Ist-Umgebungsbild mit dem gemäß Bauplanungsdaten erwarteten Soll-Umgebungsbild. Die Rechnereinheit sorgt dabei auch für eine Präzisierung der Bildmengenverarbeitung, wobei KI-Algorithmen im Rahmen einer Mustererkennung die Soll-Position exakt bestimmen, so dass eine genaue Positionierung von Bauelemente sichergestellt ist. Hierfür ist die Rechnereinheit an eine zentrale BIM-Modell-Datenbank angeschlossen. Eine ebenfalls softwaretechnische Auswerteeinheit innerhalb der zentralen Rechnereinheit führt vorzugsweise die Ermittlung der Soll-Position des zu verbauenden Bauelements im abgeglichenen Ist-Umgebungsbild nach Maßgabe der Bauplanungsdaten aus und erzeugt hieraus ein projizierbares Soll-Positionsbild des zu verbauenden Bauelements an der richtigen Stelle im Raum. Dieses wird nachfolgend an das dezentrale optische Mess- und Projektionsgerät zur Anzeige rückübertragen. Es ist jedoch auch möglich, dass die Auswerteeinheit Bestandteil des optischen Mess- und Projektionsgeräts ist, um das Volumen der zu übertragenden Datenmenge auf dem Datenfernübertragungskanal zu minimieren. Dieser ist vorzugsweise zumindest teilweise drahtlos ausgebildet, beispielsweise per WLAN, Datenfunk, Mobilfunk oder dergleichen.

Weitere die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig. 1: eine schematische Darstellung einer verteilt angeordneten Einrichtung zum Einmessen von Bauelementen auf einer Baustelle,
- Fig. 2: eine schematische Darstellung eines Einmessvorgangs für ein Schalungselement als Bauelement,
- Fig. 3: eine schematische Darstellung eines Einmessvorgangs für einen Elektroinstallationskasten als Bauelement,
- Fig. 4: einen Ablaufplan des Verfahrens zum Einmessen, welches mit der Einrichtung gemäß Fig. 1 durchgeführt wird.

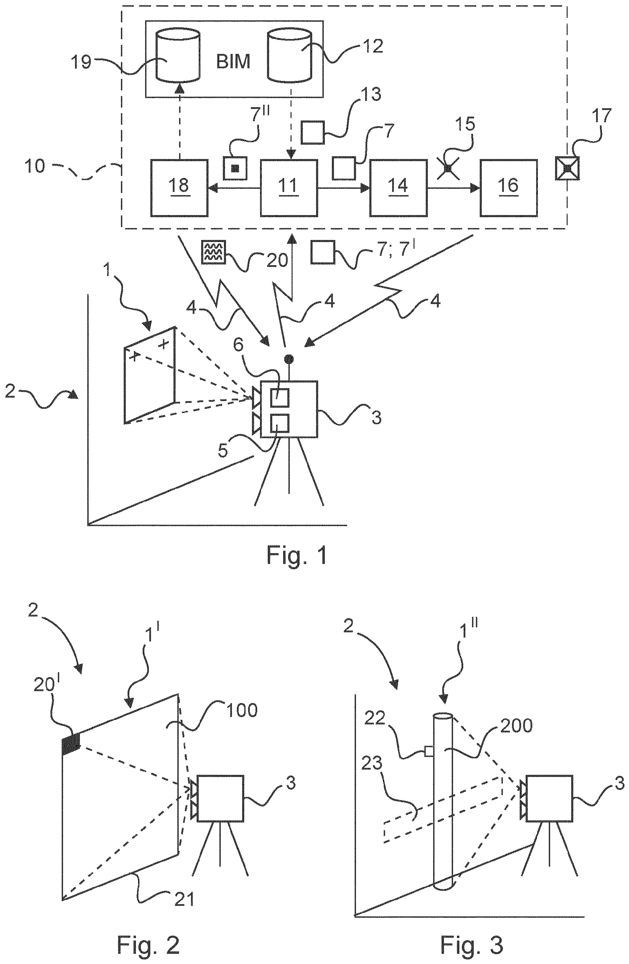

Gemäß Fig. 1 besteht eine Einrichtung zum Einmessen von Bauelementen 1 auf einer Baustelle 2 im Wesentlichen aus einem dort lokal aufgestellten optischen Mess- und Projektionsgerät 3, das eine Funkschnittstelle zur Kommunikation mit einer zentralen softwaregesteuerten Rechnereinheit 10 aufweist, so dass damit die Struktur eines Client-Server-Systems verwirklicht ist.

In diesem Ausführungsbeispiel handelt es sich bei dem Bauelement 1 um einen Elektroinstallationskasten mit Aufhängpunkten in einem Innenraum der Baustelle 2 für ein nicht weiter dargestelltes Gebäude.

Das optische Mess- und Projektionsgerät 3 weist eine integrierte Bilderzeugungseinheit 5 auf, die hier als ToF-Kamera ausgebildet ist und somit in der Lage ist, ein dreidimensionales Ist-Umgebungsbild 7 des sich im Rohbauzustand befindlichen Raums auf der Baustelle 2 in Form eines RGB-D-Bildes zu liefern, bei welchem räumliche Tiefenunterschiede durch eine hierzu proportionale Farbskala optisch sichtbar gemacht werden. Die Bilderzeugungseinheit 5 weist ferner Bildverarbeitungsmittel auf, welche die räumliche Umgebung des zu verbauenden Bauelements 1 unabhängig vom Aufstellort des Mess- und Projektionsgeräts 3 zu Vergleichszwecken in einen verzerrungsfreien Zustand umwandeln. Das optische Mess- und Projektionsgerät 3 umfasst ferner auch eine integrierte Lasereinheit 6, mit welcher eine optische Projektion eines Soll-Positionsbildes an der richtigen Stelle der Wand des hier dargestellten Innenraums der Baustelle 2 erfolgt.

Das mit dem optischen Mess- und Projektionsgerät 3 erstellte dreidimensionale verzerrungsfreie Ist-Umgebungsbild wird einer Abgleicheinheit 11 der zentralen softwaregesteuerten Rechnereinheit 10 zugeführt. Aus einer hiermit verbundenen zentralen BIM-Modell-Datenbank 12 liest die Abgleicheinheit 11 die bauabschnitts- und ortsbezogenen Bauplanungsdaten hinsichtlich eines Soll-Umgebungsbildes 13 aus, um einen Abgleich des erstellten Ist-Umgebungsbildes 7 mit dem Soll-Umgebungsbild 13 durchzuführen, damit festgestellt werden kann, ob die erwarteten Einbauumgebungsbedingungen für das Bauelement 1 vorliegen.

Ist das Ist-Umgebungsbild 7 positiv abgeglichen worden, so ermittelt eine nachfolgende Auswerteeinheit 14 eine Soll-Position des zu verbauenden Bauelements 1 im abgeglichenen Ist-Umgebungsbild 7 nach Maßgabe der eingelesenen Bauplanungsdaten. Es werden im Prinzip die für die Montage des Bauelements 1 relevanten geometrischen Abmessungen sowie die hierin enthaltene Position von Befestigungspunkten in Relation zu den Abmessungen und der Anschlusskonfiguration im Raum auf der Baustelle 2 selektiert.

Eine nachfolgende Transformationseinheit 16 erstellt aus der ermittelten Soll-Position 15 ein für die optische Projektion des zu verbauenden Bauelements 1 durch das Mess- und Projektionsgerät 3 geeignetes Soll-Positionsbild 17, das die Soll-Position 15 in der räumlichen Umgebung auf der Baustelle zur Montageunterstützung bildlich darstellt. In dem Soll-Positionsbild 17 können darüber hinaus auch textliche Montagehinweise, Warnhinweise bezüglich verdeckt verlaufender Leitungen oder dergleichen eingebunden sein.

Schließlich wird das Soll-Positionsbild 17 über den Datenfernübertragungskanal 4 an das Mess- und Projektionsgerät 3 zur optischen Ausgabe des Soll-Positionsbildes 17 in Dateiform weitergeleitet.

Die zentrale Rechnereinheit 10 umfasst weiterhin eine Prüfeinheit 18, welche ein nach erfolgter Montage durch das optische Mess- und Projektionsgerät 3 aufgenommenes Ist-Umgebungsbild 7' mit dem Soll-Zustand gemäß der Bauplanungsdaten aus der BIM-Modell-Datenbank 12 vergleicht. Nach positiver Qualitätsprüfung wird die Prüfinformation in einer Bauausführungsdatenbank 19 des BIM-Modells zu Dokumentationszwecken abgespeichert. Dahingegen erfolgt bei negativer Qualitätsprüfung die Ausgabe eines Nacharbeitshinweises in Bild-/Textform über den Datenfernübertragungskanal 4 und das optische Mess- und Projektionsgerät 3 zur unmittelbar direkten Kenntnisnahme auf der Baustelle 2.

Gemäß Fig. 2 ist das einzumessende Bauelement 1' ein Schalungselement 100 einer auf den Boden der Baustelle 2 plangerecht aufzustellenden Wandschalung. Auch hierfür liefert das optische Mess- und Projektionsgerät 3 eine Unterstützung beim Einmessen, indem auf die vorstehend erläuterte Weise ein Soll-Positionsbild in Form einer Riss- und Schattenriss-Positionsmarkierung 20 auf den Boden projiziert wird. Daneben kann das optische Mess- und Projektionsgerät 3 auch andere positionierrelevante Haupt- und Hilfslinien ausgeben.

Nachdem auf diese Weise das eine Stellschalung repräsentierende Schalungselement 100 eingemessen und positioniert ist, kann relativ hierzu eine Schließschalung montiert und anschließend eine Qualitätsprüfung der auf diese Weise eingemessenen Schalung nach der vorstehend erläuterten Vorgehensweise durchgeführt werden. Im Rahmen des Einmessens des Schalungselements 100 kann gegebenenfalls auch eine Neigungsmessung sowie räumliche Winkelanpassung des Schalungselements 100 durchgeführt werden. Im Rahmen der Qualitätsprüfung kann beispielsweise eine nicht korrekt im Winkelmaß stehende Schalungsecke durch einen farblich markierten Nacharbeitshinweis 20' hervorgehoben werden.

Nach Fig. 3 ist das zu verbauende Bauelement 1" ein vertikal entlang einer Wand auf der Baustelle 2 verlaufender Kanal 200 zur Unterbringung eines elektrischen Leitungsstrangs oder dergleichen. Der Kanal 200 wird auf dieselbe Weise wie vorstehend erläutert eingemessen, wobei hierbei als geometrische Positioniermarkierung 22 der Befestigungspunkt zum Anschrauben des Kanals 200 an die Wand der Baustelle 2 durch das optische Mess- und Projektionsgerät 3 bildlich angezeigt wird. Die bildliche Ausgabe umfasst daneben auch die Darstellung einer verdeckt in der Nähe der Positioniermarkierung 22 verlaufenden Medienleitung 23, um ein Anbohren derselben im Zuge der Befestigung des Kanals 22 zu vermeiden.

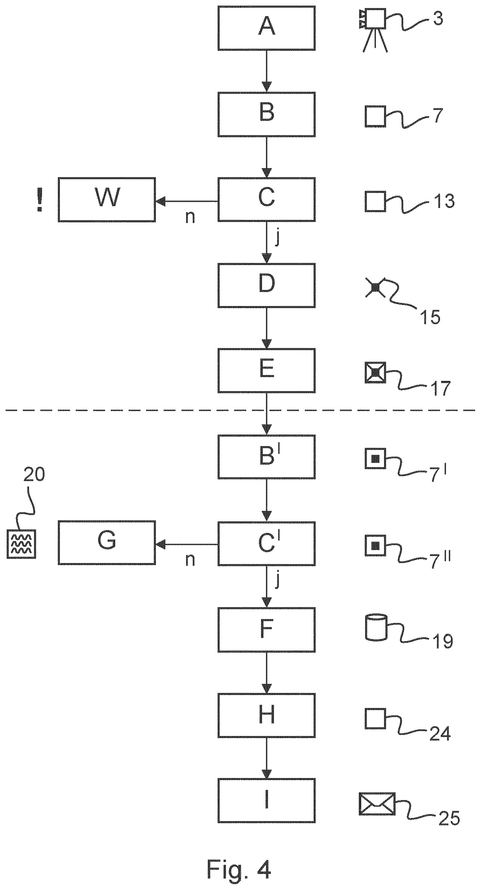

In der Fig. 4 wird das durch die vorstehend beschriebene Einrichtung nebst Varianten durchgeführte computergestützte Verfahren zum Einmessen von Bauelementen 1,1' oder 1'' illustriert, wozu die folgenden Verfahrensschritte mit anschließender Qualitätsprüfung durchgeführt werden:
Zunächst erfolgt ein Aufstellen A des optischen Mess- und Projektionsgeräts im Nahbereich mindestens eines zu verbauenden Bauelements. Anschließend wird ein Einlesen B der räumlichen Umgebung des zu verbauenden Bauelements zur Erstellung eines dreidimensional verzerrungsfreien Ist-Umgebungsbildes 7 durchgeführt. Bei einem anschließenden Abgleichen C des erstellten Ist-Umgebungsbildes 7 mit einem Soll-Umgebungsbild 13 gemäß vorgegebener Bauplanung wird festgestellt, ob die erwarteten räumlichen Umgebungsbedingungen vorliegen. Ist dies nicht so, erfolgt ein entsprechender Warnhinweis W.

Bejahendenfalls wird im folgenden Schritt ein Ermitteln D einer Soll-Position 15 des zu verbauenden Bauelements im abgeglichenen Ist-Umgebungsbild 7 nach Maßgabe der Bauplanungsdaten durchgeführt. Schließlich kann eine Projektion E eines aus der ermittelten Soll-Position 15 erstellten Soll-Positionsbildes 17 des zu verbauenden Bauelements durch das optische Mess- und Projektionsgerät 3 in dessen räumlicher Umgebung auf der Baustelle zur Montageunterstützung vorgenommen werden.

Im Rahmen einer optional anschließenden Qualitätsprüfung nach erfolgter Montage des Bauelements wird ein erneutes Einlesen B' des Ist-Positionsbildes 7' durch das optische Mess- und Projektionsgerät 3 vorgenommen, um nachfolgend ein Abgleichen C' mit dem Soll-Umgebungsbild 7" gemäß des erwartungsgemäßen Baufortschritts vorzunehmen. Nach positiver Qualitätsprüfung j des montierten Bauelements erfolgt ein Abspeichern F der diesbezüglichen Prüfinformation in der Bauausführungsdatenbank 19 zu Dokumentationszwecken. Im Falle einer negativen Qualitätsprüfung n erfolgt dahingegen eine Ausgabe G einer Fehlermeldung in Form eines Nacharbeitshinweises, der durch das Mess- und Projektionsgerät auf der Baustelle optisch ausgegeben wird.

Nach positiver Qualitätsprüfung und deren Dokumentation erfolgt eine Aktualisierung H des hiermit erzielten Baufortschritts in einer Baufortschrittsanzeige 24, wonach die Ausgabe I einer Startinformation 25 per E-Mail an den Verantwortlichen eines Nachfolgegewerks durchgeführt wird. Hierdurch kann beispielsweise nach Durchführung, Prüfung und Dokumentation der Montage einer Elektroinstallation das Malergewerk zur Oberflächengestaltung auf die Baustelle bestellt werden.

Die Erfindung ist nicht beschränkt auf das vorstehend beschriebene bevorzugte Ausführungsbeispiel. Es sind vielmehr auch Abwandlungen oder Vereinfachungen hiervon denkbar, welche vom Schutzbereich der nachfolgenden Ansprüche mit umfasst sind. So ist es beispielsweise nicht zwingend, dass das optische Mess- und Projektionsgerät eine Bilderzeugungseinheit in Form einer 3D-Kamera aufweist. Auch andere, einfachere Messeinheiten zur Umgebungserfassung und Positionierung des optischen Mess- und Projektionsgeräts sind denkbar, welche über beispielsweise Aufstellmarken oder Koordinatenangaben eine korrekte Positionierung gestatten.

### Bezugszeichenliste

- 1: Bauelement
- 2: Baustelle
- 3: Mess- und Projektionsgerät
- 4: Datenfernübertragungskanal
- 5: Bilderzeugungseinheit
- 6: Lasereinheit
- 7: Ist-Umgebungsbild
- 10: Rechnereinheit
- 11: Abgleicheinheit
- 12: BIM-Modell-Datenbank
- 13: Soll-Umgebungsbild
- 14: Auswerteeinheit
- 15: Soll-Position
- 16: Transformationseinheit
- 17: Soll-Positionsbild
- 18: Prüfeinheit
- 19: Bauausführungsdatenbank
- 20: Nacharbeitshinweis
- 21: erste Positioniermarkierung
- 22: zweite Positioniermarkierung
- 23: dritte Positioniermarkierung
- 24: Baufortschrittsanzeige
- 25: Startinformation

## Patentansprüche

1. Computergestütztes Verfahren zum Einmessen von Bauelementen (1; 1'; 1") auf einer Baustelle für die Errichtung oder den Ausbau eines Gebäudes, umfassend die folgenden Schritte:
- Aufstellen (A) eines optischen Mess- und Projektionsgeräts (3) im Nahbereich mindestens eines zu verbauenden Bauelements (1; 1'; 1") auf der Baustelle,
- Einlesen (B) der räumlichen Umgebung des zu verbauenden Bauelements (1; 1'; 1") zur Erstellung eines dreidimensional verzerrungsfreien IST-Umgebungsbildes (7),
- Abgleichen (C) des erstellten IST-Umgebungsbildes () mit einem SOLL-Umgebungsbild (13) gemäß vorgegebener Bauplanungsdaten durch eine Abgleicheinheit (11) des Mess- und Projektionsgeräts (3),
- Ermitteln (D) einer SOLL-Position (15) des zu verbauenden Bauelements (1; 1'; 1") im abgeglichenen IST-Umgebungbild (7) nach Maßgabe der Bauplanungsdaten,
- Projektion (E) eines aus der ermittelten SOLL-Position () der Bauplanungsdaten erstellten SOLL-Positionsbildes (17) des zu verbauenden Bauelements (1; 1'; 1") durch das optische Mess- und Projektionsgerät (3) in dessen räumlicher Umgebung auf der Baustelle zur Montageunterstützung.

2. Computergestütztes Verfahren nach Anspruch 1,
**dadurch gekennzeichnet, dass** zur Qualitätsprüfung (j/n) nach erfolgter Montage des Bauelements (1; 1'; 1") ein
- Einlesen (B') des IST-Umgebunsbildes (7') durch das optische Mess- und Projektionsgerät (3) für einen nachfolgenden
- Abgleich (C') mit dem SOLL-Umgebungsbild (7") gemäß des erwartungsgemäßen Baufortschritts durchgeführt wird.

3. Computergestütztes Verfahren nach Anspruch 2,
**dadurch gekennzeichnet, dass** nach positiver Qualitätsprüfung (j) des montierten Bauelements (1; 1'; 1") ein
- Abspeichern (F) der Prüfinformation in einer Bauausführungsdatenbank (19) zu Dokumentationszwecken durchgeführt wird, und dass nach negativer Qualitätsprüfung (n) die
- Ausgabe (G) einer Fehlermeldung in Form eines Nacharbeitshinweises (20; 20'; 20") erfolgt.

4. Computergestütztes Verfahren nach Anspruch 3,
**dadurch gekennzeichnet, dass** der Nacharbeitshinweis (20; 20'; 20") durch Projektion einer SOLL/IST-Abweichungsmarkierung durch das Mess- und Projektionsgerät (3) auf der Baustelle optisch ausgegeben wird.

5. Computergestütztes Verfahren nach Anspruch 2,
**dadurch gekennzeichnet, dass** nach positiver Qualitätsprüfung (j) ein
- Aktualisieren (H) des damit erzielten Baufortschritts in einer Baufortschrittanzeige (24) durchgeführt wird, und/oder eine
- Ausgabe (I) einer Startinformation (25) an ein geplantes Nachfolgegewerk durchgeführt wird.

6. Einrichtung zum Einmessen von Bauelementen (1; 1'; 1") auf einer Baustelle für die Errichtung oder den Ausbau eines Gebäudes gemäß einem Verfahren nach mindestens einem der vorstehenden Ansprüche, umfassend:
- ein optisches Mess- und Projektionsgerät (3) zum Einlesen der räumlichen Umgebung des zu verbauenden Bauelements (1; 1'; 1"),
- eine hiermit verbundene Bilderzeugungseinheit (5) zur Erstellung eines dreidimensional verzerrungsfreien IST-Umgebungsbildes (7),
- eine Abgleicheinheit (11) zum Abgleichen des erstellten IST-Umgebungsbildes (7) mit einem SOLL-Umgebungsbild (13) gemäß vorgegebener Bauplanungsdaten,
- eine Auswerteeinheit (14) zum Ermitteln einer SOLL-Position (15) des zu verbauenden Bauelements (1; 1'; 1") im abgeglichenen IST-Umgebungsbild (7) nach Maßgabe der Bauplanungsdaten,
- eine Transformationseinheit (16) zum Erstellen eines SOLL-Positionsbildes (17) aus der ermittelten SOLL-Position (15) für eine optische Projektion des zu verbauenden Bauelements (1; 1'; 1") durch das Mess- und Projektionsgerät (3) in dessen räumlicher Umgebung auf der Baustelle zur Montageunterstützung.

7. Einrichtung nach Anspruch 6,
**dadurch gekennzeichnet, dass** eine Prüfeinheit (18) zur Qualitätsprüfung nach erfolgter Montage des Bauelements (1; 1'; 1") an das optische Mess- und Projektionsgerät (3) angeschlossen ist.

8. Einrichtung nach Anspruch 6,
**dadurch gekennzeichnet, dass** die Bilderzeugungseinheit (5) des optischen Mess- und Projektionsgerät (3) als eine 3D-Kamera ausgebildet ist.

9. Einrichtung nach Anspruch 8,
**dadurch gekennzeichnet, dass** das dreidimensionale IST-Umgebungsbild (7) nach Art eines RGB-D Bildes ausgeführt ist.

10. Einrichtung nach Anspruch 6,
**dadurch gekennzeichnet, dass** das optische Mess- und Projektionsgerät (3) eine Lasereinheit (6), ein Laser-Galvanometer, ein optischer Beamer und/oder ein Galvanometer zur optischen Projektion des SOLL-Positionsbildes (17) umfasst.

11. Einrichtung nach Anspruch 6,
**dadurch gekennzeichnet, dass** das SOLL-Positionsbild (17) geometrische Positioniermarkierungen (21, 22, 23) für das zu verbauende Bauelement (1; 1'; 1") und/oder verdeckt verlaufende Elemente umfasst.

12. Einrichtung nach Anspruch 6,
**dadurch gekennzeichnet, dass** zumindest die Abgleicheinheit (11) und die Auswerteeinheit (14) Bestandteil einer zentralen softwaregesteuerten Rechnereinheit (10) sind.

13. Einrichtung nach Anspruch 6 oder 12,
**dadurch gekennzeichnet, dass** eine zentrale BIM-Modell-Datenbank (12) die der Abgleicheinheit (11) vorzugebenen Bauplanungsdaten bereitstellt.

14. Einrichtung nach Anspruch 12,
**dadurch gekennzeichnet, dass** das auf der Baustelle aufgestellte optische Mess- und Projektionsgerät (3) über einen zumindest teilweise drahtlos ausgebildeten Datenfernübertragungskanal (4) mit der zentralen softwaregesteuerten Rechnereinheit (10) verbunden ist.

15. Einrichtung nach Anspruch 6,
**dadurch gekennzeichnet, dass** das zu montierende Bauelement (1; 1'; 1") ein Schalungselement (100) zum Betonieren von Gebäudeteilen oder ein Installationsobjekt zum Ausbau eines Gebäudes ist, das ausgewählt ist aus einer Objektgruppe, umfassend: Rohre und Kanäle (200), Sanitärobjekte, Elektroinstallation, Trockenbauelemente.

16. Einrichtung nach einem der vorstehenden Ansprüche,
**dadurch gekennzeichnet, dass** die Positionsfindung des optischen Mess- und Projektionsgerät (3) auf der Baustelle anhand vorgegebener Ortskoordinaten, durch manuelle Eingabe in das Gerät, durch eine einscanbare Aufstellinformation oder durch eine per Datenfernübertragung einlesbare Aufstellinformation erfolgt.

17. Computerprogrammprodukt umfassend Befehle, die bei der Ausführung des Programms durch eine Rechnereinheit (10) diese veranlassen, die Datenverarbeitungsschritte des Verfahrens nach zumindest Anspruch 1 auszuführen.
